Europäisches Patentamt

(19) European Patent Office

Office européen des brevets

(11) Publication number: **0 214 637**
**B1**

(12) **EUROPEAN PATENT SPECIFICATION**

(45) Date of publication of patent specification: **03.01.90**

(21) Application number: **86112383.4**

(22) Date of filing: **08.09.86**

(51) Int. Cl.⁵: **G 01 N 27/28, G 01 N 27/30**

(54) Reference liquid comprising CsCl and method of use.

(30) Priority: **09.09.85 US 773498**

(43) Date of publication of application:
**18.03.87 Bulletin 87/12**

(45) Publication of the grant of the patent:
**03.01.90 Bulletin 90/01**

(84) Designated Contracting States:
**CH DE FR GB IT LI SE**

(56) References cited:
**EP-A-0 030 503**
**US-A-3 897 315**
**US-A-4 053 381**
**US-A-4 199 412**

(73) Proprietor: **EASTMAN KODAK COMPANY (a New Jersey corporation)**
**343 State Street**
**Rochester New York 14650 (US)**

(72) Inventor: **Kissel, Thomas Robert**
**Kodak Park**
**Rochester New York 14650 (US)**

(74) Representative: **Brandes, Jürgen, Dr.rer.nat. et al**
**Thierschstrasse 8**
**D-8000 München 22 (DE)**

# EP 0 214 637 B1

## Description

This invention relates to a reference liquid used in a differential mode ion analysis requiring two substantially identical dry-operative, ion-selective electrodes.

The ion activity measurements conducted in the assays described in U.S. Patent No. 4,053,381, issued October 11, 1977, are obtained by using a differential potential measurement on two substantially identical strips of an ion-selective electrode (hereinafter, "ISE"), responsive to a particular ion. As used herein, "dry-operative" refers to the ability of the ISE to be used within minutes, without delays for equilibration with $H_2O$. This is a property that appears to be peculiar to the ISE's described in the aforesaid patent. Aliquots of a sample, e.g., biological fluid, and a so-called "reference liquid", are both deposited. Each aliquot is deposited so that it contacts one of the two ISE's and one end of an ion bridge that allows the sample and reference solution to make liquid, and thus electrical, contact between the ends of the bridge. The voltage difference between the two electrodes is noted, and this voltage difference is converted by a calibration technique to ion concentration for that particular ion.

The reference liquid has several critical functions. For any given ion test, and therefore, for any given kind of ISE, that liquid must set a stable electrode potential (called "poising" the electrode) that is essentially constant from ISE to ISE for that type. That is, the method of calibration is based on the assumption that such potential will be essentially constant within a manufacturing lot. A typical manufacturing lot will contain up to several hundred thousand ISE's, and the goal is for each ISE within the lot to be identical if tested with similar fluids.

In addition, it must reduce any variation in liquid junction potential when the reference liquid contacts the sample. For this reason, the reference liquid is analogous, not to calibrators, but to salt-bridge fluids such as saturated KCl, used in single or double junction reference electrodes such as the saturated calomel electrode.

Prior to this invention, commercial reference liquids for systems, such as that provided by Eastman Kodak Company for use with the Ektachem 400™ or 700™ Analyzer of Eastman Kodak Company, have been successful in most respects. However, they lacked equal ion transference that provides sufficient equal solution mobility for both the cations and anions. The chloride ISE for this assay is preferably that described in US Patent No. 4,199,412, wherein a cellulose acetate polymer overcoat is disposed on layers of silver chloride and silver. As a result, the ion transference at the liquid junction with the patient sample lacked the ability to dominate a bias that is otherwise created when the sample ion content changes drastically (such as from patient to patient.) What was observed in practice is that part of the change in the patient's ISE potential was created by a change in liquid junction potential rather than solely by a true change in ion activity. Because such changes in junction potential are not a true measure of the changed ion content, there is thus introduced a random bias. Such a bias makes proper operation difficult, since it is not amenable to correction by calibration.

For obvious reasons of simplicity, such Eastman Kodak Company reference liquid has a single composition that contains all the ions necessary for use in all the ion tests of interest, namely $K^{\oplus}$, $Na^{\oplus}$, $Cl^{\ominus}$ and $CO_2$. That is, it is obviously too cumbersome to switch to a different reference fluid just because a different ion is being tested in the next ISE test. Thus, a typical composition for such a conventional commercial reference liquid is a solution comprising $Na^{\oplus}$, $Cl^{\ominus}$, small amounts of $K^{\ominus}$ (0.045 $M$), acetate$^{\ominus}$, and $HCO_3^{\ominus}$, with a total ionic strength of 0.15 $M$. The $HCO_3^{\ominus}$ anion is used to poise the ISE for the analysis of $CO_2$. The 0.0045 $M$ amount of $K^{\oplus}$ is less than that conventionally considered adequate (1 $M$) to provide equal ion solution transference.

It has also been known prior to this invention, that certain ions do provide equitransference, or sufficient equal solution mobility, such as will dominate the junction potential noted above created by varying concentrations of the ion of choice. For the anion of the equitransferant salt, it has been assumed prior to this invention that anions other than chloride can be used to overcome the liquid junction potential. And for the chloride anion, it has been known that the following cations have approximate equal solution mobility: potassium, ammonium, cesium and rubidium. This is apparent from the approximately equal equivalent ionic conductivity values given for these and for Cl in, e.g., pages D—171 and 172 of the CRC Handbook of Chemistry & Physics, 65th Ed., 1984. $Tl^{\oplus}$ also is shown with sufficient solution mobility, but it is known to be unacceptable because of its toxicity and expense. (These have not been described, however, for use with an anion used to poise an electrode to assay for $CO_2$.) Because the commercial reference liquid included the bicarbonate anion to allow usage with the $CO_2$ ISE, it is readily evident that the ammonium cation is unacceptable in such a combination. That is, there is no pH that will keep the bicarbonate from converting into $CO_2$ gas that escapes from the liquid (which occurs at a pH $\leq 8.0$) and at the same time keeps the ammonium from converting into $NH_3$ that escapes from the liquid (at a pH $\geq 8.0$).

Thus, the problem to be solved by this invention was to find a cation having approximately equal solution mobility with $Cl^{\ominus}$ and which does not create an unacceptable imprecision when testing for other ions.

In accord with one aspect of the invention, there is provided a reference liquid for use with a) a sample liquid to determine ionic activity of analytes, using differential analysis, and b) two substantially identical dry-operative, ion-selective electrodes, the reference liquid comprising a solution mixture of 1) CsCl, and 2) an anion suitable for poising one of the electrodes for the analysis of the activity of $CO_2$.

2

In accord with another aspect of the invention, there is provided a method for determining ionic activity of analytes, using the reference liquid set forth in the previous paragraph.

Thus, it is an advantageous feature of the invention that an equitransferent reference liquid is provided that overcomes the random bias due to junction potentials created by the sample liquid, without creating imprecision when used to test for other ions such as $Na^\oplus$ and $HCO_3^\ominus$.

The subject invention is described in connection with a reference liquid tested with certain specific ISE's. In addition, it is useful with any ISE construction that analyzes for ions using the differential mode requiring two substantially identical dry-operative ISE's.

As noted, the preferred construction of the test element containing the ISE's is that taught in the aforesaid Patent No. 4,053,381.

The reference liquid of this invention comprises a solution mixture of CsCl, and an anion that poises one of the paired ISE's for the analysis of $CO_2$. Most preferably, such poising anion is $HCO_3^\ominus$, in an amount of from 0.2 to 0.4 $M$.

The equitransferent anion needs to be chloride, because other anions fail to give a sufficiently rapid equilibrium potential when used with a chloride ISE comprising silver and silver chloride layers overcoated with a cellulose acetate polymer.

Regarding the Cs of the CsCl, this is used in an amount sufficient to provide equal solution transference with $Cl^\ominus$. Such amounts are preferably 1 to 4 $M$, and most preferably 1 to 2 $M$.

For reasons not well understood, the use of amounts of potassium $\geq 1$ $M$ for equal solution transference, results in unacceptable precision errors when testing for $Na^\oplus$ with the $Na^\oplus$ ISE.

Optionally, the solution mixture also includes 0—0.3 $M$ $Na^\oplus$, 0—0.1 $M$ $OH^\ominus$, 0—0.2 $M$ $K_2SO_4$ or $Cs_2SO_4$, 0—5 g/L of a thickener such as poly(vinyl pyrrolidone), or 0—120 mg/L of a bactericide such as thio-mercurisalicyclic acid available under the trade name thimerosal. In any event, such additives and composition of the reference liquid are preferably adjusted so that the pH of the reference liquid is between about 9 and 10. Below 9, the $HCO_3^\ominus$ tends to decompose to release $CO_2$ gas. Above 10, there is enough $OH^\ominus$ to possibly interfere with the carbonate in the setting of the $CO_2$ potential.

The following Table 1 lists representative useful preparations of reference liquid compositions of the invention.

TABLE 1

Useful Compositions (Molar Concentration)**

| Prep. No. | CsCl* | KHCO₃ | MHCO₃* | M'OH* | pH |
|---|---|---|---|---|---|
| 1 | 1.2 | — | 0.2(Na) | 0.08(Na) | 9.5 |
| 2 | 1.4 | — | 0.2(Na) | 0.07(K) | 9.5 |
| 3 | 1.2 | — | 0.2(Na) | 0.07(K) | 9.5 |
| 4 | 1.4 | 0.2 | — | 0.07(Na) | 9.5 |
| 5 | 1.2 | 0.2 | — | 0.07(Na) | 9.5 |
| 6 | 1.6 | — | 0.25(Na) | 0.09(K) | 9.5 |
| 7 | 1.2 | — | — | 0.005(K) | 9.5 |
| 8 | 1.2 | — | 0.2(Cs) | 0.08(Na) | 9.5 |

\* M or M' are noted in parentheses for each example.
\*\* All also contained 3 g/L of poly(vinyl pyrrolidone) thickener.

For reasons that are not understood, $Rb^\oplus$ was found not to give improved precision compared to $K^\oplus$.

The method of the invention is practiced as described in the aforesaid U.S. Patent No. 4,053,381, except using the reference liquid described above. The same reference liquid is used in all ionic analyte tests using the paired ISE format. Because the ISE's currently available are for $Na^\oplus$, $K^\oplus$, $Cl^\ominus$ and $HCO_3^\ominus$ (also described as $CO_2$), it is for these ISE's that the reference liquid must provide precision . It has been found that, when comprised as described above, the reference liquid gives the necessary precision. As noted in the following examples, precision is considered to be acceptable if the standard deviation, sigma, is $\leq 0.17$ millivolts (hereinafter mV) for Na and Cl, 0.27 for $K^+$ and 0.35 for $CO_2$. Because of the use of significant amounts of the Cs cation and Cl anion, this reference liquid also has the necessary equal solution transference of its ions to dominate liquid junction potentials created at the interface of the reference liquid with the sample liquid.

3

## Examples

The following examples further illustrate the scope of the invention.

### Examples 1—4

#### Precision When Used With a Na$^{\oplus}$ ISE

The purpose of this experiment was to determine the precision of Na$^{\oplus}$ ISE's using the reference liquid of the present invention. 48 total replicates were made for each reference liquid tested, (12 replicates each of 4 patient blood serum specimens), to determine the pooled standard deviation of the test (designated as $\sigma_{mv}$). The acceptable level is a standard deviation no greater than 0.17 mV, a value that has been easily achieved by the commercial Kodak reference liquid already commercialized $\sigma_{mv}$ was calculated using the standard formula

$$1) \qquad \sigma_{mv} = \sum_{i=1}^{n}(V_i - V_m)^2/(n-1) ^{1/2}$$

wherein $V_i$ = individual millivolt readings for each test of l to n, n is the number of replicates, and $V_m$ is the mean of the values $V_i$. The ISE test elements were the Na$^{\oplus}$ ISE test elements available from Eastman Kodak Company, tested on an "Ektachem 700"$^{TM}$ Analyzer of Eastman Kodak by the differential method described in the aforesaid U.S. Patent No. 4,053,381.

The following reference liquids were tested:

Control = Solution containing 103.5 millimoles NaCl, 4.5 millimoles KCl, 11.5 millimoles sodium acetate, 25 millimoles NaHCO$_3$, about 5 g/L poly(vinyl pyrrolidone), 60 mg/L thimerasol (a preservative), 0.145 millimoles of total ionic strength, and a pH of 9.0.

Example 1 = Preparation 2 above
Example 2 = Preparation 3 above
Example 3 = Preparation 4 above
Example 4 = Preparation 5 above
Comparative Example 1 = Same as Preparation 1 except that 1.4 *M* KCl and 0.2 K$_2$SO$_4$ were used instead of 1.2 *M* CsCl.
Comparative Example 2 = Same as Preparation 1, except that 0.2 *M* K$_2$SO$_4$, 0.5 *M* KCl, and 0.3 *M* NaCl were used instead of 1.2 *M* CsCl.

The results appear in Table 2 that follows:

TABLE 2

| Example | Equitransferent Cation of Liquid | $\sigma_{mv}$ |
|---------|----------------------------------|---------------|
| Control | None | 0.13 |
| 1 | Cs | 0.11 |
| 2 | Cs | 0.12 |
| 3 | Cs | 0.14 |
| 4 | Cs | 0.11 |
| Comp. Ex. 1 | K | 0.21 |
| Comp. Ex. 2 | K | 0.19 |

This test demonstrated that Cs$^{\oplus}$, but not K$^{\oplus}$, gave a precision within the goal of $\sigma \leq 0.17$ mV. This was particularly surprising in light of the fact that K$^{\oplus}$ would normally be the cation of choice, since one of the assays tested using the reference liquid is K$^{\oplus}$, rather than Cs$^{\oplus}$. Just why a reference liquid based upon potassium as the equitransferent cation, should produce such sodium imprecision, is not understood.

Ten separate repeats were run on the procedure of Example 1, Comparative Example 1, and the control. In all but one of those separate repeats, the use of significant, equitransferent amounts of K$^{\oplus}$ failed to provide precision ($\sigma_{mv}$) equal to or better than the control, whereas the use of Cs$^{\oplus}$ did give precision equal to or better than the control. IN the one repeat that did not demonstrate this, no statistically significant difference, at the 95% confidence level, could be found between the control and K$^{\oplus}$ on the one hand, or the control and Cs$^{\oplus}$ on the other hand. The inconsistency of this one repeat is not understood, and because it was only one out of ten, it is disregarded.

## Example 5

### Precision When Used With a Cl⊖ ISE

The process of Examples 1—4 was repeated, except that the tests were of Preparation 3, on a Cl⊖ ISE, with 15 replicates. (The chloride ISE was prepared as described in the aforesaid US Pat. No. 4,199,412, as layers of silver and silver chloride overcoated with cellulose acetate polymer.) $\sigma_{mV}$ was found to be 0.12, well within the goal of ≤0.17.

Most of the above-noted Preparations 1—6 were also tested for precision on $CO_2$ ISE's, and on $K^{\oplus}$ ISE's, in a similar manner. The standard deviations were all within the goals of 0.27 mV for $K^{\oplus}$ and 0.35 mV for $CO_2$.

## Examples 6—8

### Improvements in Removal of Liquid Junction Potential

To demonstrate that the reference liquid of the invention does indeed remove the liquid junction potential due to the equal solution transference of its ions, the process of Examples 1—4 was repeated, except that on the patient sample side, first 0.01 $M$ NaCl in $H_2O$, and second 0.1 $M$ NaCl in $H_2O$, were tested against the candidate reference liquids noted hereinafter. The temperature of the test was 22°C. The theoretical response, based on the Nernstian equation, for two such samples, is

$$\Delta E = 58.56 \log[a_{Na}(0.1)/a_{Na}(0.01)] + \Delta E_j (0.1/0.01).$$

Solving for this equation for a zero $\Delta E_j$ (no liquid junction potential), one finds that $\Delta E$ should be 54.6 mV. The purpose of these examples then is to measure the actual $\Delta E$ (in mV), and determine to what extent it differs from the predicted 54.6 mV. That difference represents $\Delta E_j$. The $\Delta E$ is, of course, the difference in the electrometer reading obtained, first, when testing the 0.01 $M$ NaCl solution against candidate 1 of the following list, and second, when testing the 0.1 $M$ NaCl solution against that same candidate. The other candidate liquids were tested in the same manner. (As noted above, the junction potential is a problem if it is large, only when comparing two liquids of considerably different activity.)

### Candidate Reference Liquids

Control = 2 $M$ KCl in $H_2O$
Ex. 6 = Preparation 1 above
Ex. 7 = Preparation 2 above
Ex. 8 = Preparation 3 above
Comparative Ex. 3 = Control for Ex. 1—4 above. (The control in this instance is the 2 $M$ KCl solution, because this is known to provide an acceptably small $\Delta E_j$ — that is, it has acceptable equal solution transference in its ions.)

The results are given in the following Table 4:

### TABLE 4

| Candidate Liquid | Observed ΔmV | (Observed ΔmV — 54.6) |
|---|---|---|
| Control | 55.4 | 0.80 |
| Ex. 6 | 55.2 | 0.60 |
| Ex. 7 | 55.4 | 0.80 |
| Ex. 8 | 54.7 | 0.10 |
| Comparative Ex. 3 | 61.7 | 7.10 |

As expected, Comparative Example 3 failed to provide an acceptably small $\Delta E_j$, particularly compared to what was achieved by the control and the examples of the invention. On the other hand, a variation of only ±0.8 mV from the predicted 54.6 value is acceptable.

## Claims

1. A reference liquid for use with a sample liquid to determine ionic activity of analytes, using differential analysis, and two substantially identical dry-operative, ion-selective electrodes e.g. a chloride ion-selective electrode comprising silver-silver chloride layers overcoated with a polymer, said reference liquid comprising a solution mixture of 1) CsCl, and 2) an anion suitable for poising one of said electrodes for the analysis of the activity of $CO_2$.

2. A reference liquid as defined in claim 1, wherein CsCl is present in a concentration of from 1.0 to 2.0 *M*, and $HCO_3^{\ominus}$ is said anion for poising and is present in a concentration of from 0.2 to 0.4 *M*.

3. A reference liquid as defined in claim 1 or 2, and further including $Na^{\oplus}$, $So_4^{\ominus}$, $K^{\oplus}$, or $OH^{\ominus}$.

4. A method for determining ionic activity of analytes in a sample liquid, using dry-operative ion-selective electrodes including a chloride ion-selective electrode comprising silver-silver chloride layers overcoated with a polymer, the method comprising the steps of

a) contacting an aliquot of the sample liquid with one of two substantially identical dry-operative, ion-selective electrodes and one end of an ion bridge,

b) contacting an aliquot of a reference liquid with another, substantially identical ion-selective electrode and the other edge of said ion bridge, said reference liquid comprising a solution mixture of 1) CsCl, and 2) an anion suitable for poising one of said electrodes for the analysis of the activity of $CO_2$, and

c) measuring the voltage difference generated by said liquids on said electrodes.

**Patentansprüche**

1. Bezugsflüssigkeit für die Verwendung mit einer Flüssigkeitsprobe zur Bestimmung der ionischen Aktivität von Analyten nach der Differentialanalyse und mit zwei praktisch identischen trocken arbeitenden, ionenselektiven Elektroden, z.B. einer Chloridionen-selektiven Elektrode mit Sibler-Silberchloridschichten, die mit einem Polymer bedeckt sind, bestehend aus einer Lösungsmischung mit

1) CsCl, und

2) einem Anion, das dazu geeignet ist, eine der Elektroden für die Analyse der Aktivitiät von $CO_2$ im Gleichgewicht zu halten.

2. Bezugsflüssigkeit nach Anspruch 1, in der

CsCl in einer Konzentration von 1,0 bis 2,0 *M* vorliegt, und

$HCO_3^{\ominus}$ das Anion ist, um die eine Elektrode im Gleichgewicht zu halten und das in einer Konzentration von 0,2 bis 0,4 *M* vorliegt.

3. Bezugsflüssigkeit nach Anspruch 1 oder 2, die ferner enthält: $Na^{\oplus}$, $SO_4^{\ominus}$, $K^{\oplus}$ oder $OH^{\ominus}$.

4. Verfahren zur Bestimmung der ionischen Aktivität von Analyten in einer Flüssigkeitsprobe, unter Verwendung von trocken arbeitenden, ionenselektiven Elektroden einschließlich einer Chloridionen-selektiven Elektrode mit Silber-Silberchloridschichten, die mit einem Polymer bedeckt sind, mit den Stufen:

a) Inkontaktbringen eines Bruchteiles der Flüssigkeitsprobe mit einer der zwei praktisch identischen, trocken arbeitenden ionenselektiven Elektroden mit einem Ende einer Ionenbrücke,

b) Inkontaktbringen eines Bruchteils einer Bezugsflüssigkeit mit einer anderen, praktisch identischen ionenselektiven Elektrode mit dem anderen Ende der Ionenbrücke, wobei die Bezugsflüssigkeit eine Lösungsmischung aus

1) CsCl, und

2) einem Anion, das dazu geeignet ist, eine der Elektroden für die Analyse der Aktivität von $CO_2$ im Gleichgewicht zu halten, ist, und

c) Messen der Spannungsdifferenz, die durch die Flüssigkeiten an den Elektroden hervorgerufen wird.

**Revendications**

1. Liquide de référence à utiliser avec un échantillon liquide pour déterminer l'activité ionique de substances à doser, par analyse différentielle et au moyen de deux électrodes sélectives d'ions utilisables à sec pratiquement identiques, par exemple une électrode sélective d'ions chlorures constituée de couches d'argent et de chlorure d'argent recouvertes d'un polymère, ledit liquide de référence comprenant une solution qui est un mélange de:

1) CsCl, et

2) d'un anion capable d'équilibrer l'une desdites électrodes pour l'analyse de l'activité de $CO_2$.

2. Liquide de référence tel que défini dans la revendication 1, dans lequel CsCl est présent à une concentration comprise entre 1,0 et 2,0 *M* et $HCO_3^-$ est ledit anion pour équilibrer et est présent à une concentration comprise entre 0,2 et 0,4 *M*.

3. Liquide de référence tel que défini dans la revendication 1 ou la revendication 2, et comprenant de plus des ions $Na^+$, $SO_4^{2-}$, $K^+$ ou $OH^-$.

4. Procédé pour déterminer l'activité ionique de substance à doser dans un échantillon liquide, utilisant des électrodes sélectives d'ions utilisables à sec, y compris une électrode sélective d'ions chlorures constituée de couches d'argent et de chlorure d'argent recouvertes d'un polymère, procédé comprenant les étapes suivantes:

a) on met en contact une partie aliquote de liquide échantillon avec l'une des deux électrodes sélectives d'ions opérant à sec practiquement identiques, et avec une extrémité d'un pont ionique,

b) on met en contact une partie aliquote de liquide de référence avec l'autre électrode sélective d'ion pratiquement identique à la première, et avec l'autre extrémité du pont ionique, ledit liquide de référence comprenant une solution qui est un mèlange de

1) CsCl, et

2) d'un anion capable d'équilibrer l'une desdites électrodes pour l'analyse de $CO_2$, et

c) on mesure la différence de voltage générée par lesdits liquides sur lesdites électrodes.